# EUROPEAN PATENT APPLICATION

(11) **EP 1 840 891 A2**
(43) Date of publication of application: **03.10.2007**
(21) Application number: 07104660.1
(22) Date of filing: 22.03.2007
(51) Int. Cl.: G11B 7/135

(54) **Optical pickup device and optical information recording/reproducing device**

(30) Priority: 30.03.2006 JP 2006095537
(71) Applicant: Toshiba Samsung Storage Technology Corporation, Kawasaki City, Kanagawa 212-0013 (JP)
(72) Inventor: Ishika, So Toshiba Samsung Storage Techn. Corp., Kawasaki-City, Kanagawa 212-0013 (JP)
(74) Representative: Henkel, Feiler & Hänzel

(57) **Abstract**

There is disclosed an optical pickup device having semiconductor laser light sources (10,12,14) for first, second, and third wavelengths different from each other. After optical paths of laser beams outgoing from the first and second semiconductor laser light sources are synthesized by a first prism (22), an optical path of a laser beam outgoing from the third semiconductor laser light source is synthesized, through a magnification change lens (26), to raise light efficiency. At this time, each of the laser beams is synthesized by a second prism (24).

## Description

### CROSS REFERENCES TO RELATED APPLICATIONS

This application is based on and claims the benefit of priority from the prior Japanese Patent Application No. 2006-095537, filed on March 30th, 2006, the entire contents of which are incorporated herein by reference.

### BACKGROUND OF THE INVENTION

### 1. Field of the Invention

The present invention relates to an optical pickup device and an optical information recording/reproducing device, and particularly to an optical pickup device and an optical information recording/reproducing device which record three wavelengths.

### 2. Description of the Related Art

In recent years, there are active developments for high-density optical information recording media using short wavelength blue laser beams and optical disk devices for recording/reproducing such media. These devices are demanded to be compatible with various media which use different wavelengths, such as CDs and DVDs.

There hence has been proposed an optical pickup (for example, see Jpn. Pat. Appln. Laid-Open Publication No. 2004-103135). In this optical pickup, three wavelengths of a long wavelength (for CDs), a medium wavelength (for DVDs), and a short wavelength (for blue rays) are grouped into two. One is a group including two of the three wavelengths, and the other is a group including the remaining one by means of beam splitter approximate to an objective lens. One optical element is used in common for the group of the two wavelengths in consideration of the layout space.

There has been proposed another optical pickup (for example, see Jpn. Pat. Appln. Laid-Open Publication No. 2005-141884) which comprises: a first semiconductor laser light source that emits a laser beam of a wavelength band of 405 nm; a semiconductor laser light source that integrates a second semiconductor laser light source for emitting a laser beam of a wavelength band of 650 nm and a third semiconductor laser light source for emitting a laser beam of a wavelength band of 780 nm; an optical path synthesis means that synthesizes optical paths of the laser beams of each wavelength bands; an objective lens that forms an image by the laser beams on an optical information recording medium; a light receiving element that receives the laser beams reflected on the optical information recording medium, to detect optical information; and an optical path branching means that performs branching between an optical path from each of the semiconductor laser light sources to the optical information recording medium and an optical path from the optical information recording medium to the light receiving element. The optical pickup comprises a filter means for adjusting light transmission amounts of the wavelength bands of 405 nm, 650 nm and 780 nm between the optical path branching means and the light receiving element.

In the optical pickup described in Publication No. 2004-103135, three PDICs (Photo Diode-IC) as light receiving elements for the optical pickup are required as light-source detection units for three wavelengths, respectively. The other optical pickup described in Publication No. 2005-141884 has a structure of integrating the second semiconductor laser light source for emitting a laser beam of a wavelength band of 650 nm and the third semiconductor laser light source for emitting a laser beam of a wavelength band of 780 nm. Therefore, this optical pickup gives rise to a problem that a lens for changing a magnification cannot be provided aiming only at increase in light efficiency of the laser beam of the wavelength band of 780 nm (infrared light).

### BRIEF SUMMARY OF THE INVENTION

It is an object of the present invention to provide an optical pickup device in which a three-wavelength optical system capable of raising light efficiency for only infrared light is constituted by use of one single light receiving element.

In an aspect of the present invention, there is provided an optical pickup device comprising:
a first semiconductor laser light source for a short wavelength;
a second semiconductor laser light source for a medium wavelength;
a third semiconductor laser light source for a long wavelength;
a first prism that synthesizes optical paths of laser beams from the first and second semiconductor laser light sources, the laser beams being incident on the first prism;
a magnification change lens that increases light efficiency of a laser beam from the third semiconductor laser light source;
a second prism that synthesizes an optical path of the laser beam subjected to a magnification change by the magnification change lens with an optical path of a beam outgoing from the first prism;
an objective lens that forms an image of each of three of the laser beams on an optical information recording medium;
a light receiving element that receives, through the objective lens, each of the laser beams reflected on the optical information recording medium, to detect optical information; and
a beam splitter that is provided between the objective lens and the light receiving element and the second prism and splits optical paths from the semiconductor laser light sources to the objective lens optical information recording medium and optical paths from the objective lens optical information recording medium to the light receiving element.

### BRIEF DESCRIPTION OF THE DRAWINGS

FIGS. 1A and 1B are schematic views of an optical pickup device according to an embodiment of the present invention;
FIG. 2 is a graph showing spectral characteristics of a first prism according to the embodiment;
FIG. 3 is a graph showing spectral characteristics of a second prism according to the embodiment;
FIG. 4 is a graph showing spectral characteristics of a beam splitter according to the embodiment;
FIGS. 5A and 5B are schematic views of an optical pickup device according to another embodiment of the present invention;
FIGS. 6A and 6B are schematic views of an optical pickup device according to still another embodiment of the present invention; and
FIGS. 7A and 7B are schematic views of an optical pickup device according to still another embodiment of the present invention.

### DETAILED DESCRIPTION OF THE INVENTION

An optical pickup device according to an embodiment of the present invention will now be described with reference to the drawings.

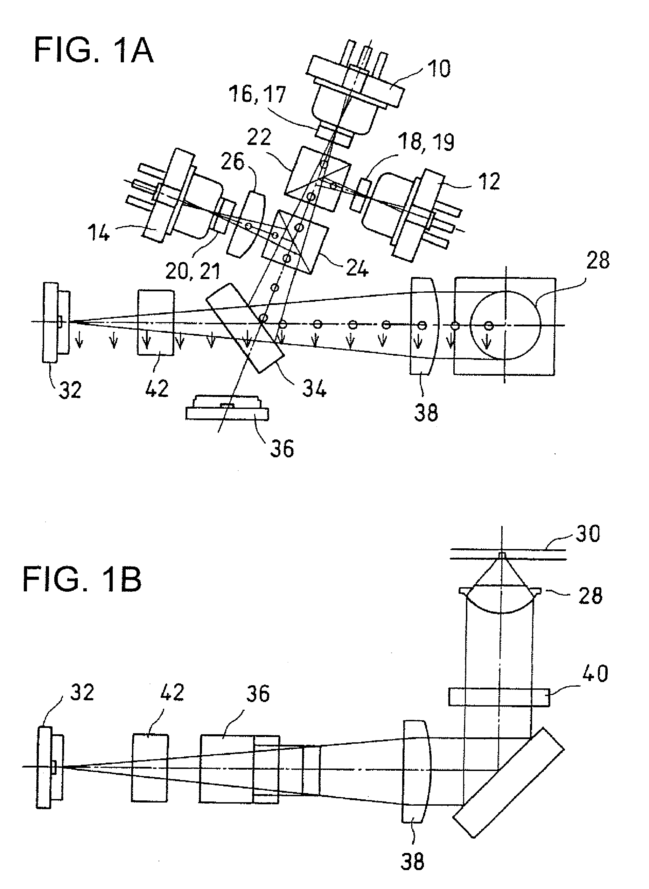

FIGS. 1 are schematic views showing structures of the optical pickup device. FIG. 1A is a top view and FIG. 1B is a side view.

As shown in FIGS. 1, the optical pickup device compatible with three wavelengths and is capable of recording/reproducing optical information on high-density media compatible with a blue laser beam, optical information recording media compatible with a red laser beam, and optical information recording media compatible with an infrared laser beam. The optical pickup device has: first to third semiconductor laser light sources 10, 12, and 14; 1/2 wavelength plates 16, 18, and 20; first and second prisms 22 and 24; a magnification change lens 26; an objective lens 28; a light receiving element 32; a beam splitter 34; a light amount monitor PDIC (Photo Diode IC) 36; a collimator lens 38; a 1/4 wavelength plate 40; and a sensor lens 42.

Further, the first semiconductor laser light source 10 is a first semiconductor laser light source which emits a blue laser beam of a wavelength band of 405 nm. The second semiconductor laser light source 12 emits a red laser beam of a wavelength band of 660 nm. The third semiconductor laser light source 14 emits an infrared laser beam of a wavelength band of 780 nm.

The 1/2 wavelength plates 16, 18, and 20 are located in front of the semiconductor laser light sources 10, 12, and 14 and rotate direction of polarization by 90 degrees. The 1/2 wavelength plates 16, 18 and 20 and the first prism 22 synthesize each of optical paths of the laser beams of the first semiconductor laser light source 10 and the second semiconductor laser light source 12. The second prism 24 synthesize an optical path of light outgoing from the first prism 22 and an optical path of a laser beam of the third semiconductor laser light source 14. The magnification change lens 26 is provided between the 1/2 wavelength plate 20 and the second prism 24 and raises light efficiency of light outgoing from the third semiconductor laser light source 14.

The magnification change lens 26 and the objective lens 28 form images on an optical disk 30 by laser beams from the semiconductor laser light sources 10, 12, and 14. The objective lens 28 and light receiving element 32 cooperate to receive laser beams reflected on the optical disk 30 and detect optical information. The beam splitter 34 which performs splitting between optical paths (outward paths denoted by plural circle marks in the drawing) to the optical disk 30 from the semiconductor laser light sources 10, 12, and 14, and optical paths (return paths denoted by plural arrows) from the optical disk 30 to the light receiving element 32.

Two or more of the three semiconductor laser light sources 10, 12, and 14 are not turned on at the same time. For example, which of the semiconductor laser light sources to use is determined depending on differences between thicknesses of optical disk 30 or in accordance with information recorded on the optical disk 30. Based on the determination, one of the three semiconductor laser light sources 10, 12 and 14 is turned on to emit a laser beam onto the optical disk 30, so that optical information is recorded on or reproduced from an information recording face of the optical disk 30.

The blue laser beam emitted from the first semiconductor blue laser light source 10 is a divergent ray having an elliptic light intensity distribution. Red and infrared laser beams emitted from the second semiconductor red laser light source 12 and third semiconductor infrared laser light source 14 are also divergent rays each having an elliptic light intensity distribution.

Laser beams with an elliptic light intensity distribution, which are emitted from the first semiconductor blue laser light source 10 and second semiconductor red laser light source 12, are incident on diffraction gratings 17 and 19 to achieve tracking according to a DPP method or three-beam method. By the diffraction gratings 17 and 19, the beams each are split into a main beam for recording/reproducing on/from an optical disk 30 (0-order light) and two sub beams for detecting tracking errors (±1-order light). In relation to rim intensity at the objective lens 28, the laser beams (main beams) emitted through the diffraction gratings 17 and 19 have elliptic shapes elongated in a direction vertical to the drawing. Simultaneously, the polarizing direction of the main beam emitted through the diffraction gratings 17 and 19 is of P-polarization to the first prism 22. Since the main beam needs to enter into the beam splitter 34 for S-polarization, the polarizing direction is rotated by 90 degrees by the 1/2 wavelength plates, and the main beam thereafter enters into the first prism 22 as S-polarization to the first prism 22.

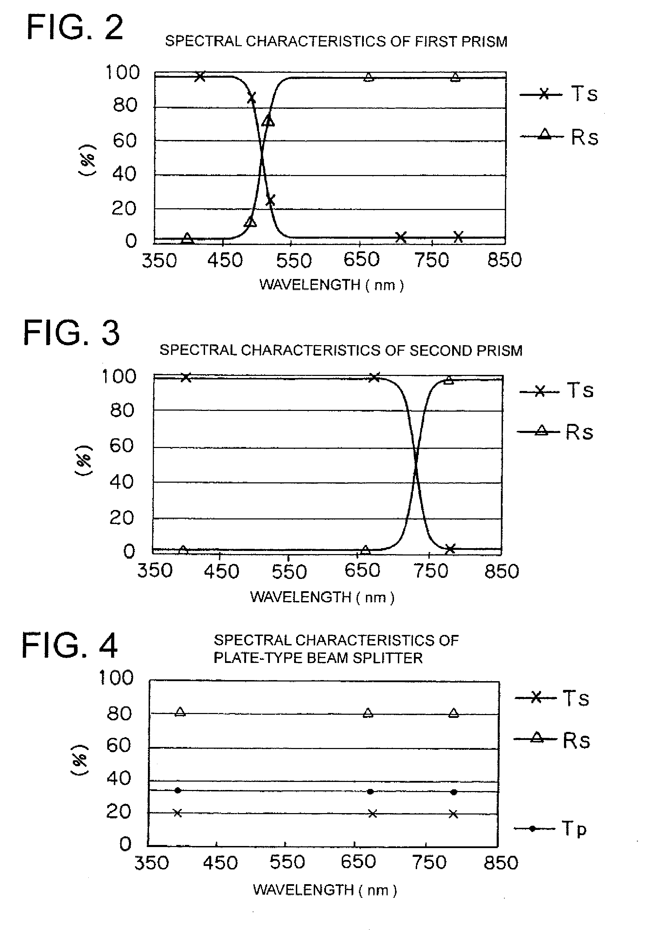

The first prism 22 synthesizes optical paths and is constructed, for example, by bonding two glass prisms with a dichroic film (not shown) inserted between the grass prisms. The dichroic film is made of a multi-layered optical thin film. The dichroic film has a wavelength selectivity which transmits a blue laser beam of a wavelength band of 405 nm from the first semiconductor laser light source 10 and reflects a red laser beam of a wavelength band of 660 nm from the second semiconductor laser light source 12. As shown in FIG. 2, the first prism 22 has spectral characteristics that S-polarization for a wavelength band of 405 nm attains a transmittance Ts close to 100% and S-polarization for a wavelength band of 660 nm attains a reflectance Rs close to 100%.

For the infrared laser beam emitted from the third semiconductor infrared laser light source 14, P-polarization is converted into S-polarization by the 1/2 wavelength plate 20. The infrared laser beam is caused to enter into the diffraction grating 21 to achieve tracking according to a DPP method or three-beam method. By the diffraction grating 21, the infrared laser beam is split into a main beam (0-order light) for recording/reproducing on/from the optical disk 30, and two sub beams for detecting tracking errors (±1-order light). The laser beam (main beam) emitted through the diffraction grating 21 is incident on the magnification change lens 26.

With respect to a spot size, recording density at the wavelength band of 780 nm is lower than at the wavelength bands of 405 nm and 660 nm. Therefore, even if the rim intensity lowers and the spot size is increased, it is further useful to raise light efficiency and recording speed.

In this respect, the light efficiency of the laser beam of the wavelength band of 780 nm is raised by allowing the laser beams to pass through the magnification change lens 26. In order to achieve a compact layout of the magnification change lens 26, the distance between the third semiconductor laser light source 14 for the wavelength band of 780 nm and the second prism 24 need to be longer. An optimal layout is arranged so as to synthesize the laser beam of the wavelength band of 780 nm after synthesizing the laser beams of the wavelength bands of 405 nm and 660 nm.

The laser beam synthesized by the first prism 22 and the laser beam subjected to a change of magnification by the magnification change lens 26 are incident on the second prism 24.

The second prism 24 is to synthesize optical paths and is constructed, for example, by bonding two glass prisms with a dichroic film (not shown) made of a multi-layered optical thin film inserted between the grass prisms. The dichroic film is made of a multi-layered optical thin film. As shown in FIG. 3, the dichroic film has a wavelength selectivity which transmits laser beams of the wavelength bands of 405 nm and 660 nm with a transmittance Ts of nearly 100 % for S-polarization and reflects a laser beam of the wavelength band of 780 nm with a reflectance Rs of nearly 100% for S-polarization.

The magnification change lens 26 has a refractive power for matching a focus position of the laser beam of the wavelength band of 780 nm to an optical path of the second prism 24. Therefore, three laser beams are caused to enter as S-polarization into the beam splitter 34 through a common path by optical path synthesis of the second prism 24.

As described above, the three laser beams are transmitted through or reflected on one of the first prism 22 and second prism 24 each of which has an S-polarization transmittance of nearly 100% and an S-polarization reflectance of nearly 100%. Optical paths are thereby synthesized causing the beams to enter as S-polarization into the beam splitter 34. Therefore, light efficiency on outward paths can be raised for all of the three wavelengths.

The beam splitter 34 desirably has a plane-parallel plate type and is constituted by: a transparent plane-parallel plate (not shown) to be a substrate; a polarization split film (not shown) formed of a multi-layered optical thin film (or a multi-la ye red optical thin film covered with a protective film) coated on one face of the plate; an anti-reflection film (not shown) formed of a multi-layered optical thin film (or a multi-layered optical thin film covered with a protective film) coated on the other face of the plate. The beam splitter 34 functions to branch optical paths.

The polarization split film has a polarization split characteristic of reflecting much of S-polarization component of incident beams at any wavelength and transmitting a constant amount of P-polarized component and S-polarized component at any wavelength. At this time, the polarizing direction of each laser beam relative to the polarization split film is of S-polarization. Therefore, a major part of each laser beam is reflected by the polarization split film which is in contact with air, thereby forming optical paths from the semiconductor laser light sources 10, 12, and 14 to an optical disk 30.

Light transmitted through or reflected on the second prism 24 is reflected by the beam splitter 34 and travels so as to enter into the objective lens 28. As shown in FIG. 4, the beam splitter 34 has spectral characteristics that the reflectance Rs of S-polarization is 80% at three wavelength bands (of 405 nm, 660 nm, and 780 nm) . By using the beam splitter 34 of a plane-parallel plate type, astigmatism can be generated with respect to returning light passing through the beam splitter 34. Therefore, focusing and error detection based on an astigmatism method can be performed.

As shown in FIG. 4, the beam splitter 34 transmits a part of S-polarized component of an incident laser beam at a transmittance Ts of 20%. The laser beam which has passed through the beam splitter 34 is received by a light amount monitor PDIC 36. The light amount monitor PDIC 36 is a monitor light receiving element which detects a light amount related to a wavelength of a laser beam output from each of the semiconductor laser light sources 10, 12, and 14, based on the laser beam which has passed through the beam splitter 34. The light amount monitor PDIC 36 is desirably inclined to a main beam of each laser beam to prevent ghosts.

On the other side, the laser beam reflected by the beam splitter 34 enters into the collimator lens 38. The collimator lens 38 transforms the incident laser beam into a substantially parallel beam. The laser beam which has been transformed into a substantially parallel beam is further transformed into circular polarization by a 1/4-wavelength plate 40 and enters into the objective lens 28, thereby forming an image as a light spot on an information recording face of an optical disk 30. The objective lens 28 is of a type having a wavelength compatibility and is not limited to a single lens system but can employ a twin lens system.

The laser beam which forms an image on the recording face of the optical disk 30 is reflected on the recording face to become return light. The return light passes the objective lens 28, 1/4-wavelength plate 40, and collimator lens 38 in this order, and returns to the polarization beam splitter 34 . Since the reflected laser beam passes through the 1/4-wavelength plate 40 on the way back to the beam splitter 34, the reflected laser beam enters as P-polarization into the polarization split film and is transmitted at a transmittance Tp of nearly 30% for P-polarization, as shown in FIG. 4. An optical path from an optical disk 30 to a signal detection PDIC 32 which is the light receiving element 32 is formed by the transmission of P-polarized component through the 1/4-wavelength plate 40.

The light which has passed through the beam splitter 34 passes through the sensor lens 42 for astigmatism and enters into the PDIC 32 for detecting a light receiving element signal. Optical information included in the entering light is detected by the PDIC 32 for detecting a light receiving element signal.

According to the present embodiment, a so-called astigmatism method can be employed for focus error detection. A DPD method (differential phase detection method) or a DPP method (differential push-pull method) can be employed for tracking error detection. Since the beam splitter 34 as an inclined plane-parallel plate is used, astigmatism is additionally effected when a laser beam passes through the beam splitter 34. Accordingly, a focus error signal can be obtained with a simple structure.

The light receiving element 32 is constituted by the PDIC (Photo Diode IC) for signal detection. The light receiving element 32 is constituted by, for example, a multi-divided PIN photo diode, and each element outputs a current output proportional to the intensity of incident beams or a voltage converted to 1 V. From this output, an information signal, a focus error signal, and a tracking error signal are generated through, for example, a detection circuit not shown.

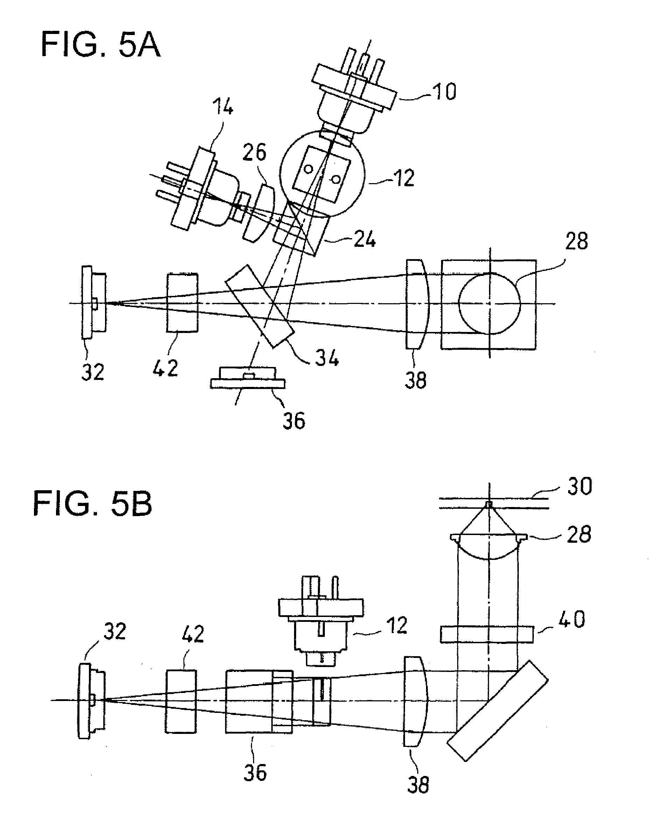

A layout of the semiconductor laser light sources 10, 12, and 14 described above is not limited to the embodiment shown in FIG. 1. As shown in FIG. 5A as a top view and FIG. 5B as a side view, an optical path from the second semiconductor laser light source 12 for the wavelength band of 660 nm can be synthesized from above the first prism 22. As an alternative, the optical path from the second semiconductor laser light source 12 for the wavelength band of 660 nm can be synthesized from below the first prism 22 although the alternative layout is omitted from the drawings because the layout is substantially upside down of the layout shown in FIGS. 5.

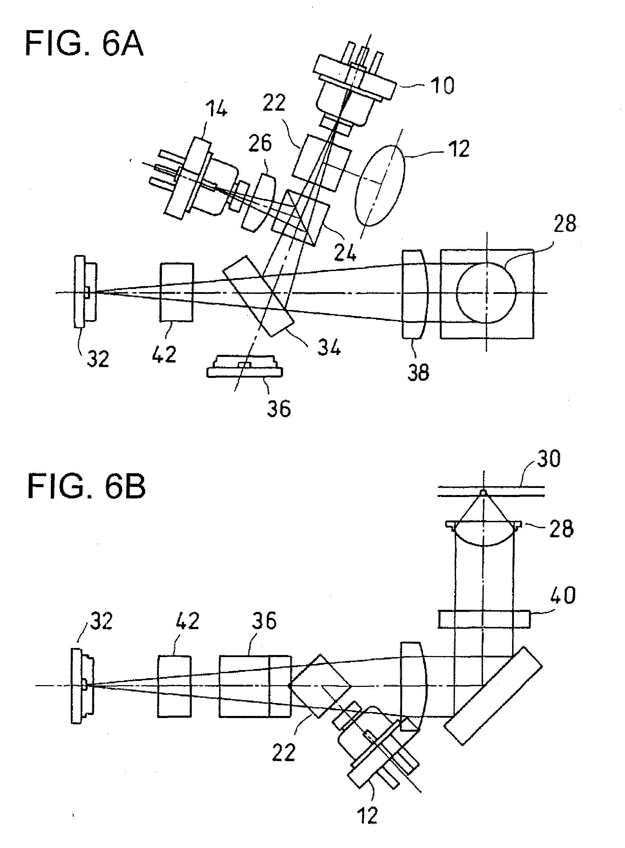

Further alternatively, an optical path from the second semiconductor laser light source 12 for the wavelength band of 660 nm can be synthesized from obliquely below the first prism 22, as shown in FIG. 6A as a top view and FIG. 6B as a side view. As another alternative, an optical path from the second semiconductor laser light source 12 for the wavelength band of 660 nm can be synthesized from obliquely above the first prism 22 although the alternative layout is omitted from the drawings because the layout is substantially an inversion of the layout shown in FIGS. 5.

In addition, the positions of the first semiconductor laser light source 10 for the wavelength band of 405 nm and the second semiconductor laser light source 12 for the wavelength band of 660 nm can be replaced with each other. In this case, the optical path from the first semiconductor laser light source 10 for the wavelength band of 405 nm can be synthesized from any of positions above, below, obliquely above, and obliquely below the first prism 22.

As described above, the optical path from the first semiconductor laser light source 10 for the wavelength band of 405 nm or the second semiconductor laser light source 12 for the wavelength band of 660 nm can be synthesized from any of positions above, below, obliquely above, and obliquely below the first prism 22. Therefore, space can be used effectively without enlarging limited layout space for the optical system. Such effective use of space contributes to downsizing of an optical pickup device compatible with three wavelengths.

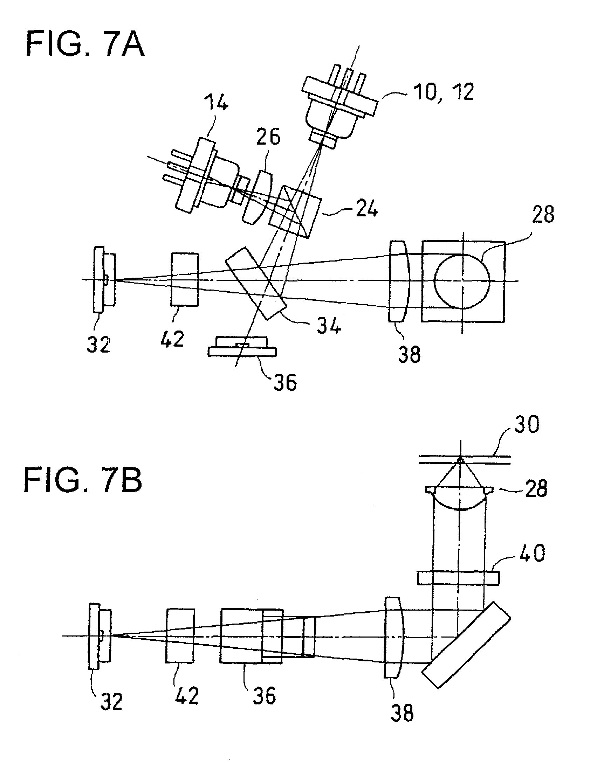

Furthermore, as shown in FIG. 7A as a top view and FIG. 7B as a side view, the first semiconductor laser light source 10 for the wavelength band of 405 nm and the second semiconductor laser light source 12 for the wavelength band of 660 nm can be contained together in one chip or one package. Optical paths of laser beams for three wavelengths can be synthesized by using only the second prism 24 without using the first prism 22. Even in this case, light efficiency of the laser beam from the third semiconductor laser light source 14 for the wavelength band of 780 nm is raised by transmitting the laser beam through the magnification change lens 26.

Optical paths of the three laser beams described above are synthesized by transmitting or reflecting the laser beams through or on the second prism 24 which has an S-polarization transmittance of nearly 100% or an S-polarization reflectance of nearly 100% with respect to each of wavelengths of the laser beams. The laser beams therefore enter as S-polarization into the beam splitter 34. Accordingly, light efficiency on outward paths can be increased for all of the three wavelengths. Further, the first semiconductor laser light source 10 for the wavelength band of 405 nm and the second semiconductor laser light source 12 for the wavelength band of 660 nm are contained together in one chip or one package. Therefore, space can be used effectively without enlarging limited layout space for the optical system. Such effective use of space contributes to downsizing of an optical pickup device compatible with three wavelengths.

The optical pickup device according to the embodiment of the present invention records/reproduces information by forming images of laser beams from semiconductor laser light sources on optical information recording media. The optical pickup device can be incorporated in an optical information recording/reproducing device.

As described above, according to this embodiment, high-density media can be supported, and laser beams of three wavelengths each can be caused, with a simple structure, to enter as S-polarization into the beam splitter 34 which splits outward and returning paths. Light efficiency can be increased for all of the three wavelengths. The light efficiency can also be increased by lowering an optical magnification rate for infrared light. Recording speed can be increased by increasing an amount of light from the objective lens 28.

The present invention is not limited to the embodiment as described above. In practical stages, the present invention can be realized by variously modifying constitutional elements without deviating from the subj ect matter of the invention. In addition, various inventions can be configured by appropriately combining plural constitutional elements disclosed in the above embodiment. For example, several constitutional elements can be deleted from the all constitutional elements described in the embodiment. Further, constitutional elements of different embodiments can be appropriately combined.

## Claims

1. An optical pickup device comprising:
a first semiconductor laser light source (10) for a short wavelength;
a second semiconductor laser light source (12) for a medium wavelength;
a third semiconductor laser light source (14) for a long wavelength;
a first prism (22)that synthesizes optical paths of laser beams from the first and second semiconductor laser light sources, the laser beams being incident on the first prism;
a magnification change lens (26) that increases light efficiency of a laser beam from the third semiconductor laser light source;
a second prism (24)that synthesizes an optical path of the laser beam subjected to a magnification change by the magnification change lens with an optical path of a beam outgoing from the first prism;
an objective lens (28)that forms an image of each of three of the laser beams on an optical information recording medium(30);
alight receiving element (32) that receives, through the objective lens, each of the laser beams reflected on the optical information recording medium, to detect optical information; and
a beam splitter(34) that is provided between the objective lens and the light receiving element and the second prism and splits optical paths from the semiconductor laser light sources to the optical information recording medium and optical paths from the optical information recording mediumtothelightreceiving element.

2. The optical pickup device according to claim 1, further comprising
1/2-wavelength plates (20) that are provided between the first prism and the first and second semiconductor laser light sources and between the second prism and the third semiconductor laser light source and respectively rotate polarizing directions of the light sources by 90 degrees, wherein
the laser beams from the first, second, and third semiconductor laser light sources enter as S-polarization into the second prism so as to be transmitted through or reflected on the second prism, and beams as S-polarization outgoing from the second prism enter as S-polarization into the beam splitter.

3. The optical pickup device according to claim 1 or 2, wherein
of the first and second semiconductor laser light sources, one that emits a laser beam to be transmitted through the first and second prisms is provided on the same plane as the first and second prisms.

4. The optical pickup device according to claim 1, wherein
of the first and second semiconductor laser light sources, one that emits a laser beam to be reflected on the first prism and be transmitted through the second prism is provided above, below, obliquely above, or obliquely below the first prism.

5. The optical pickup device according to claim 3,
wherein
the first, second, and third semiconductor laser light sources respectively emit laser beams of wavelength bands of 405 nm, 660 nm, and 780 nm.

6. An optical pickup device comprising:
first and second semiconductor laser light sources (10), (12) contained in one chip or one package, the first and second semi conductor laser light sources emitting short and medium wavelengths, respectively;
a third semiconductor laser light source (14)that emits a long wavelength;
a prism (24) that synthesizes optical paths of laser beams outgoing through the chip or package from the first and second semiconductor laser light sources, and an optical path of a laser beam from the third semiconductor laser light source;
a magnification change lens (26)that is provided between the third semiconductor laser light source and the prism and increases light efficiency of the laser beam emitted from the third semiconductor laser light source;
an objective lens (28)that forms an image of each of three of the laser beams on an optical information recording medium disk;
a light receiving element (32) that receives, through the objective lens, each of the laser beams reflected on the optical information recording medium disk, to detect optical information; and
a beam splitter(34) that splits optical paths from the first, second and third semiconductor laser light sources to optical disk and optical paths from optical disk to the light receiving element.

7. The optical pickup device according to claim 6, further comprising
1/2-wavelength plates (20) that are provided between the prism and the first and second semiconductor laser light sources in the one chip or one package and the third semiconductor laser light source and respectively rotate polarizing directions of the light sources by 90 degrees, wherein
the laser beams from the first, second, and third semiconductor laser light sources enter as S-polarization into the prism so as to be transmitted through or reflected on the prism, and beams as S-polarization outgoing from the prism enter as S-polarization into the beam splitter.

8. The optical pickup device according to claim 6 or 7, wherein
the first, second, and third semiconductor laser light sources respectively emit laser beams of wavelength bands of 405 nm, 660 nm, and 780 nm.

9. An optical information recording/reproducing device comprising an optical pickup device according to any one of claims 1 to 8 that forms an image of a laser beam from a semiconductor laser light source onto an optical information recording medium, to record/reproduce information.

10. An optical information recording/reproducing device comprising an optical pickup device according to claim 6 that forms an image of a laser beam from a semiconductor laser light source onto an optical information recording medium, to record/reproduce information.
